# FASCICULE DE BREVET EUROPEEN

(11) **EP 2 085 266 B1**
(45) Date de publication et mention de la délivrance du brevet: **09.03.2011**
(21) Numéro de dépôt: 09150062.9
(22) Date de dépôt: 05.01.2009
(51) Int. Cl.: B60R 5/00, B60R 7/08

(54) **Galerie interieure**
Innerer Dachgepäckträger
Inside roof rack

(30) Priorité: 31.01.2008 FR 0850585
(43) Date de publication de la demande: 05.08.2009
(73) Titulaire: PEUGEOT CITROËN AUTOMOBILES SA, 78140 Vélizy Villacoublay (FR)
(72) Inventeur: Reau, Christine, 78500, SARTROUVILLE (FR); Villa, Laurent, 91460, MARCOUSSIS (FR)

(56) Documents cités:
- EP-A- 1 661 761
- EP-A- 1 842 727
- DE-U1- 20 304 920
- FR-A- 2 591 164
- FR-A- 2 723 046
- FR-A- 2 896 205
- US-A- 2 599 824
- US-A- 2 988 252

## Description

L'invention concerne une galerie de toit intérieure exploitant la hauteur de pavillon importante de certains véhicules particuliers ou utilitaires.

Plus particulièrement, l'invention vise un produit pour transporter des charges longues, telles qu'une échelle, des skis, un surf ou des portes de placard, à l'intérieur d'un véhicule dont on souhaite pouvoir fermer les portes.

Le document FR 2 591 164 décrit un ensemble permettant l'aménagement d'un logement pour les objets plus particulièrement plats et fragiles à la partie supérieure et intérieure d'un véhicule automobile. Des tendeurs permettent l'aménagement de l'espace de rangement selon la charge qui ne doit, cependant pas être excessive. D'autre part, le dispositif décrit dans ce document obstrue une partie du volume intérieur du véhicule, y compris en absence d'objets à transporter.

<Le document EP 1 842 727 décrit un dispositif conforme au préambule de la revendication 1.>

Pour remédier aux inconvénients connus de l'état de la technique, un objet de l'invention est un dispositif de chargement d'au moins un objet long en partie haute de l'intérieur d'un véhicule comprenant deux parois latérales. Le dispositif comprend :
- une barre pour supporter ledit objet et de longueur adaptée à la largeur du véhicule ;
- un pied à chaque extrémité de la barre et comprenant une ouverture ;
- deux éléments mâles de fixation, chacun agencé pour traverser l'une des deux parois latérales et l'ouverture du pied ;
- une première molette venant se visser sur une extrémité de l'élément mâle qui dépasse de l'ouverture.

Particulièrement, le pied a une forme de L avec une première partie et une deuxième partie perpendiculaire à la première partie, la première partie comprenant l'ouverture et la deuxième partie étant agencée pour maintenir la barre.

Le dispositif comprend une entretoise agencée pour être disposée dans un habillage intérieur de véhicule, entre l'une des parois et le pied, l'entretoise comprenant une ouverture de part en part pour y faire passer l'élément de fixation.

L'entretoise comprend deux bourrelets agencés pour enchâsser verticalement la première partie du pied en maintenant ladite deuxième partie dans un plan perpendiculaire à la paroi.

Plus particulièrement aussi, la longueur de la première partie est dimensionnée de façon à ce qu'une première orientation verticale de la première partie du pied, place la barre dans une position repos en haut de l'intérieur du véhicule et en ce qu'une deuxième orientation verticale à 180° de la première partie du pied, place la barre dans une position travail plus basse qui permet le chargement de l'objet long.

Préférentiellement, l'entretoise est dimensionnée de façon à ce qu'un choc dépassant des limites standardisées de sécurité, déchausse le pied de l'entretoise en maintenant la barre en partie haute de l'intérieur du véhicule.

Avantageusement aussi, le dispositif comprend une planchette agencée pour être disposée contre l'une des parois, la planchette étant agencée pour être fixée verticalement en partie haute au moyen d'une deuxième molette.

Plus particulièrement, la planchette comprend deux nervures agencées pour translater verticalement la première partie du pied en maintenant ladite deuxième partie dans un plan perpendiculaire à la paroi.

Plus particulièrement aussi, la longueur de la planchette est dimensionnée de façon à pouvoir adapter la hauteur de la barre au volume de l'objet chargé.

Avantageusement encore, le dispositif comprend au moins un coulisseau agencé pour glisser le long de la barre et pour faire passer au moins une sangle sous la barre.

D'autres caractéristiques et avantages de l'invention ressortiront plus clairement de la description qui en est faite ci-après, à titre indicatif et nullement limitatif, en référence aux dessins annexés, dans lesquels :
- la figure 1 est une vue en perspective d'un élément mâle de fixation ;
- la figure 2 est une vue en perspective d'un élément femelle de fixation ;
- la figure 3 est une vue en perspective des éléments de la figure 1 et de la figure 2 interagissant ;
- la figure 4 est une vue en coupe de l'élément de la figure 2 positionné entre deux éléments à assembler ;
- la figure 5 est une vue de face d'un moyen de fixation s'adaptant sur l'élément de la figure 2 ;
- la figure 6 est une vue en coupe d'un assemblage conforme à l'invention ;
- la figure 7 montre une barre de galerie munie des ses dispositifs d'encrage à chacune de ses extrémités ;
- la figure 8 représente un morceau de paroi de véhicule pour y fixer une barre de galerie conforme à l'invention ;
- la figure 9 est une vue en perspective d'un pontet ressort de fixation ;
- les figures 10 et 11 montrent le haut d'un habitacle de véhicule équipé d'une barre de galerie conforme à l'invention ;
- la figure 12 est une vue en coupe de la barre de galerie représentée en figure 11 ;
- la figure 13 est une vue en perspective d'un coulisseau de passage de sangles ;
- la figure 14 montre le coulisseau de la figure 13 monté sur la barre représentée en figure 11 ;
- la figure 15 est une vue partielle en perspective de la barre représentée en figure 11 ;
- la figure 16 est une vue en perspective tronquée d'un autre mode de réalisation de l'invention ;
- la figure 17 est une vue en perspective d'un pied conforme au mode de réalisation de la figure 16.
   En référence à la figure 1, un élément de fixation 1 comprend une partie cylindrique lisse 2, une extrémité 3 filetée, une extrémité opposée à tête plate 4 et un collet carré 5 pour empêcher la rotation de l'élément 1 lorsqu'il est prisonnier dans l'ancrage d'un support.

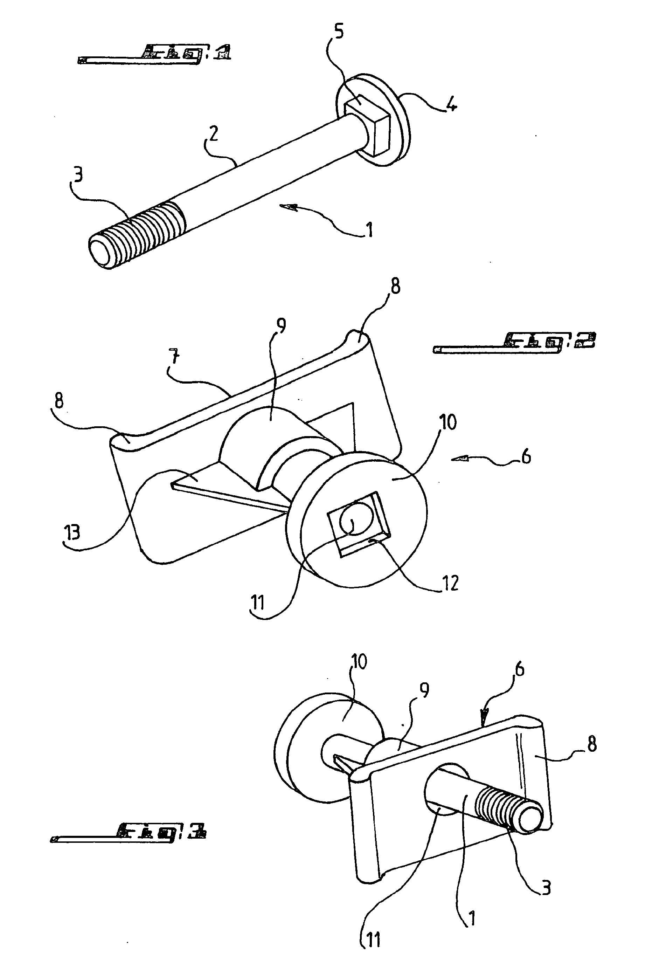

En référence à la figure 2, une entretoise 6 comprend une partie plate 7 dont deux extrémités opposées sont munies de bourrelets 8 sur toute leur longueur. Une partie cylindrique 9 est dressée sur une face de la partie plate 7 opposée à celle sur laquelle se dressent les bourrelets 8. A l'extrémité opposée de l'entretoise 6 qui supporte la partie plate 7, un disque plat 10 comprend en son centre une ouverture carrée 12 de taille ajustée à celle du collet carré 5 de l'élément 1. Une ouverture cylindrique 11 traverse l'entretoise 6 depuis le disque 10 jusqu'à la partie plate 8 avec un diamètre adapté pour laisser passer le corps cylindrique 2 et l'extrémité filetée 3 de l'élément mâle de fixation 1. L'entretoise 6 est éventuellement munie d'ailettes de rigidification 13.

En référence à la figure 3, l'élément de fixation mâle 1 est introduit dans l'élément de fixation femelle constitué par l'entretoise 6 de façon à laisser dépasser son extrémité filetée 3 de la face de la partie plate 7 sur laquelle s'élèvent les bourrelets 8.

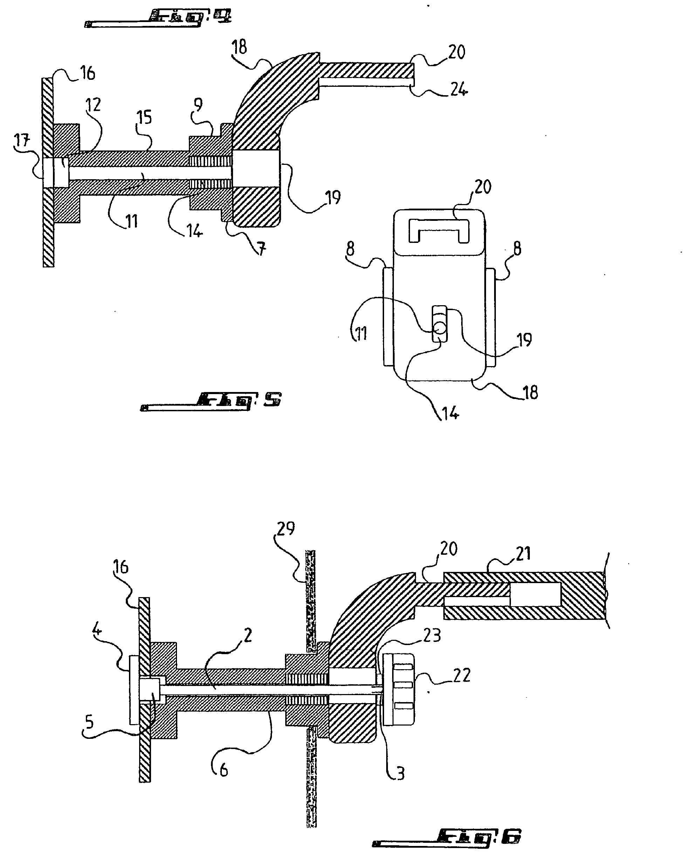

En référence à la figure 4, la face externe du disque plat 10 est appliquée contre une paroi 16 qui comprend une ouverture carrée 17 semblable à l'ouverture 12. Un pied 18 est appliqué contre la face externe de la plaque 7. En référence à la figure 5 sur laquelle le pied 18 est représenté en vue de face, on note que la largeur du pied 18 est sensiblement égale à la distance qui sépare les deux bourrelets 8 de sorte que le pied 18 est coincé en position verticale entre les deux bourrelets 8. Le pied 18 comprend en son centre un trou oblong 19 qui permet de voir l'extrémité de l'ouverture 11 en autorisant un débattement vertical du pied 18. Le pied 18 est courbé de façon à présenter une face supérieure verticale sur laquelle une excroissance 20 est prévue pour y monter une barre de galerie. L'excroissance 20 comprend une glissière 24 agencée pour permettre un glissement de la barre de galerie de façon, comme nous le verrons plus tard, à ajuster la galerie à la largeur du véhicule. L'entretoise 6 représentée en figure 4 diffère de l'entretoise 6 représentée en figure 3 en ce qu'elle comprend un ressort 14 qui entoure l'ouverture 11 au niveau de la partie plate 7 de façon à être comprimée lorsque le pied 18 est appliqué contre la partie 7. Une portion cylindrique 15 et une portion cylindrique 9 joignent le disque 10 à la partie plate 7. La partie cylindrique 9 entre la partie cylindrique 15 et la partie plate est de même diamètre que la partie 15 ou éventuellement de diamètre supérieur de façon à faciliter l'insertion du ressort 14.

En référence à la figure 5, l'élément de fixation 1 est introduit dans l'entretoise 6 de façon à ce que le disque 4 vienne s'appliquer contre la paroi 16 sur la face opposée à celle sur laquelle s'applique l'entretoise 6. Le collet carré 5, prisonnier dans les ouvertures 17 et 12, verrouille en rotation l'entretoise 6 sur la paroi 16. La partie cylindrique 2 et l'extrémité filetée 3 sont dimensionnées de façon suffisamment longue pour traverser à la fois l'entretoise 6 et l'épaisseur du pied 18 de façon à laisser dépasser l'extrémité filetée 3. Une molette 22 possède en son centre une ouverture taraudée non visible sur la figure, adaptée au filetage de l'extrémité 3 de façon à pouvoir être vissée sur l'élément de fixation 1 pour maintenir le pied 18 fixé sur la paroi 16 via l'entretoise 6. On voit aussi sur la figure 6 une extrémité de barre 21 de galerie emmanchée sur l'excroissance 20 du pied 18.

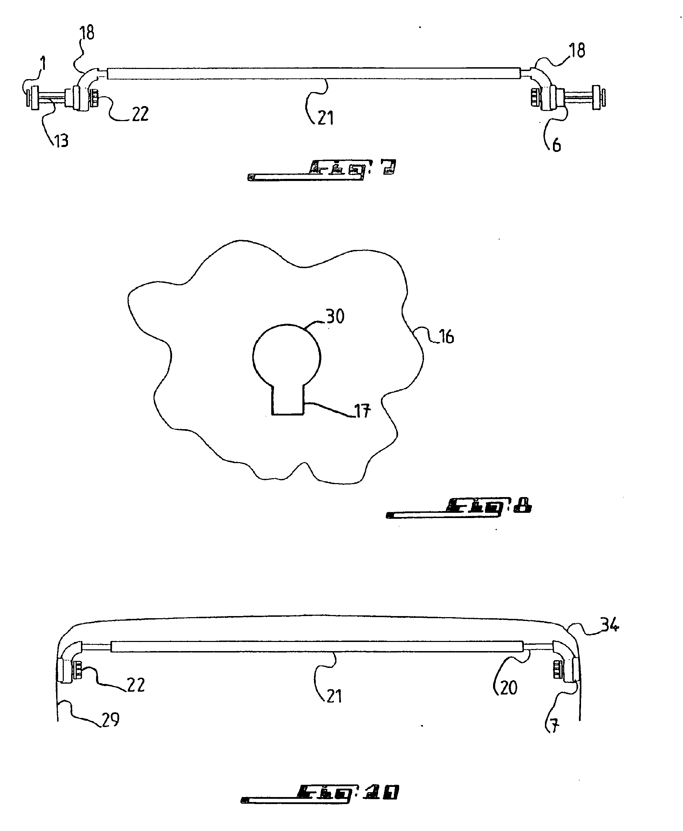

En référence à la figure 7, un pied 18 est emmanché à chaque extrémité de la barre de galerie 21. Chaque pied 18 est lui-même monté sur une entretoise 6 au moyen de la molette 22 vissée sur l'élément de fixation 1. On observe la tranche de l'ailette 13 de rigidification représentée en perspective en figure 2.

En référence à la figure 8, la paroi 16 de la partie supérieure d'un habitacle de véhicule, comprend une ouverture 30 de dimension suffisante pour laisser passer la tête plate 4 de l'élément de fixation 1 mais pas le disque 10 de l'entretoise 6. Une deuxième ouverture 17 communique avec la partie basse de l'ouverture 30. L'ouverture 17 est dimensionnée de façon à y caler le collet carré 5 de l'élément de fixation 1.

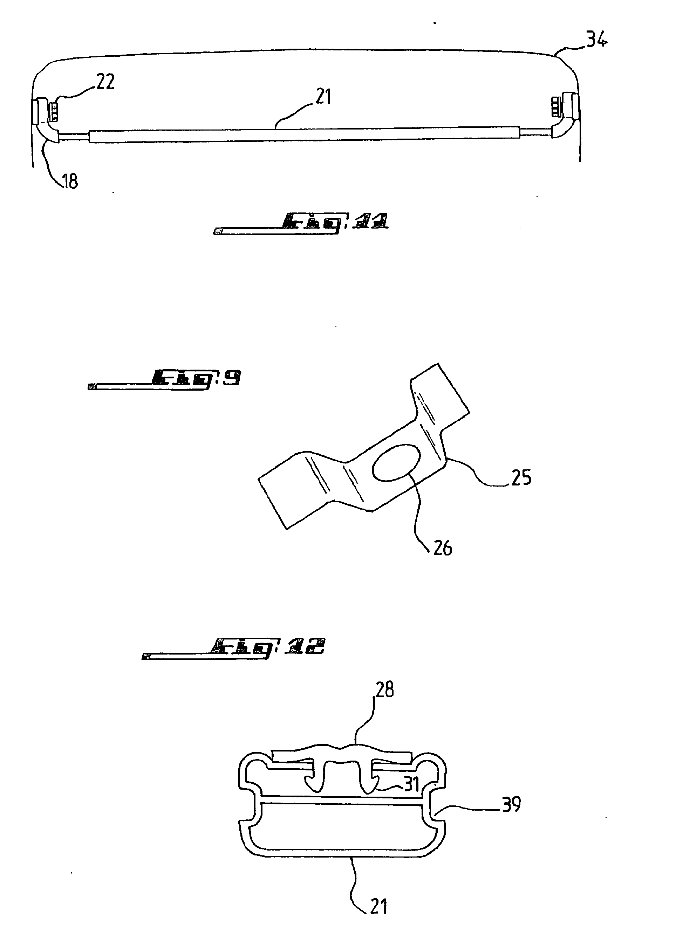

En référence à la figure 9, un pontet ressort 25 de fixation mis en place entre la molette 22 et l'équerre 18, a pour fonction de se déformer lorsque l'équerre 18 et la barre 21 doivent passer sur les bourrelets 8. Le pontet 25 comprend une ouverture 26 dimensionnée pour laisser passer l'élément de fixation 1 mais pour arrêter la molette 22.

En référence à la figure 10, la barre de galerie 21 est montée sous le toit 34 de l'habitacle de véhicule. On prévoit de monter deux exemplaires de la barre 21, l'un à l'avant, par exemple au dessus de la tête du conducteur, et l'autre à l'arrière, par exemple au dessus de la nuque des passagers arrières. Ici, la barre 21 est représentée relevée, c'est-à-dire en position de rangement.

Il existe plusieurs façons pour monter la barre de galerie dans le véhicule.

Selon une première façon, en prenant le dispositif représenté en figure 7, on rapproche les entretoises 6 gauche et droite de façon à faire pénétrer au maximum l'excroissance 20 du pied 18 à l'intérieur de la barre 21. On introduit, par exemple l'entretoise 6 avec l'élément de fixation 1 maintenu par la molette 22 dans un trou prévu à cet effet et pratiqué dans la garniture 29 du véhicule. L'entretoise 6 est enfoncée jusqu'à ce que le disque 10 entre en contact avec la paroi 16 en faisant pénétrer la tête 4 dans l'ouverture 30. L'ensemble entretoise 6, élément de fixation 1, pied 18, est ensuite déplacé verticalement vers le bas jusqu'à venir coincer le collet carré 5 dans l'ouverture 31. L'entretoise 6 à l'opposé de la barre 21, est ensuite introduite de façon identique dans une ouverture pratiquée à l'opposé de l'habitacle dans la garniture 29 en dégageant de ce fait progressivement chacune des excroissances 20 vers l'extérieur de la barre 21 sans toutefois totalement les en sortir.

Selon une deuxième façon, la barre 21 n'étant pas préalablement engagée dans un pied 18, on enfonce préalablement, l'un des ensembles constitué de l'entretoise 6 avec l'élément de fixation 1 maintenu par la molette 22 au travers de la garniture 29 jusqu'à coincer le collet carré 5 dans l'ouverture 31 de la paroi 16 comme précédemment. On introduit à fond la barre 21 dans l'excroissance 20 du pied 18 qui vient d'être monté et on introduit à l'autre extrémité de la barre 21 l'autre pied 18 solidaire d'une autre entretoise 6 que l'on fait pénétrer à travers la garniture 29 jusqu'à la paroi 16.

Quelle que soit la façon utilisée, on arrive à la configuration représentée figure 10 ou 11 avec la partie plate 7 en contact avec la garniture 29. On tourne alors chacune des molettes 22 jusqu'à serrer chacune des têtes plates 4 contre la face arrière de la paroi 16. De la sorte, la barre 21 est rigidement maintenue en translation verticale dans la partie haute de l'habitacle du véhicule. D'autre part, le serrage de la molette 22, plaquant le pied 18 sur la partie plate 7 entre les bourrelets 8 verrouille chaque pied 18 en rotation sur l'entretoise 6, l'entretoise 6 quant à elle étant maintenue fixe en rotation par le collet carré pénétrant à la fois dans l'ouverture 17 de la paroi 16 et dans l'ouverture 12 du disque 10.

En référence à la figure 11, la barre de galerie 21 est maintenant représentée abaissée de sorte que l'espace entre la barre 21 et le toit 34 du véhicule permet le rangement d'objets plats. Pour passer de la position représentée en figure 10 à la position représentée en figure 11 et réciproquement de la position représentée en figure 11 à la position représentée en figure 10, il suffit de desserrer chacune des molettes 22 juste suffisamment pour faire riper ou en d'autres termes, pour déplacer en rotation la base du pied 18 sur chacun des bourrelets 8. On resserre ensuite chacune des molettes 22 de façon à maintenir immobile la barre 21 en position repos comme représenté en figure 10 ou en position travail comme représenté en figure 11.

En référence à la figure 12, on a représenté un exemple possible de section transversale de la barre 21. Comme nous le verrons par la suite, ce type de section n'est pas le seul possible et selon l'usage, d'autres sections peuvent être préférées. L'orientation bas, haut de la section représentée en figure 12 correspond à la position travail de la barre 21 représentée en figure 11. La barre 21 comprend au milieu de sa partie supérieure une fente qui s'étend sur toute sa longueur. Cette fente permet l'introduction de dents 31 d'un joint 28 en élastomère qui protège la barre 21 au cours du chargement. Les dents 31 servent à retenir le joint 28 lorsque la barre 21 est tournée de 180° autour de l'axe des molettes 22 pour prendre la position représentée en figure 10, le joint 28 se trouvant alors en dessous de la barre 21.

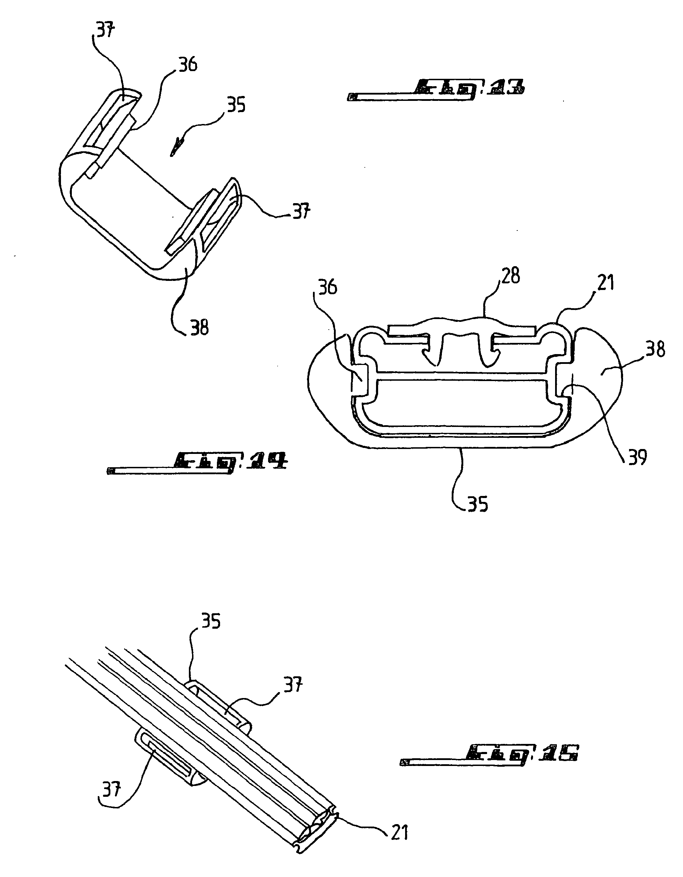

En référence à la figure 13, un coulisseau 35 a une forme de U dont la largeur interne correspond à la largeur de la barre 21. Les branches verticales du U sont en forme d'oreillettes 38 dans chacune desquelles sont percées des fentes 37 adaptées pour y faire passer une sangle. La face interne de chaque oreillette 38 est munie d'une barrette 36 adaptée pour faire glisser le coulisseau 35 le long de la barre 21 comme expliqué à présent en référence à la figure 14. La barre 21 comprend une glissière 39 qui s'étend sur toute la longueur du côté droit et du côté gauche comme déjà représenté sur la figure 12. La glissière 39 est dimensionnée pour recevoir la barrette 36 de façon à pouvoir déplacer le coulisseau 35 jusqu'à un endroit voulu de la barre 21.

En référence à la figure 15, le coulisseau 35 étant placé à un endroit voulu de la barre 21, on peut faire passer une sangle dans la fente 37, par exemple à gauche du coulisseau 35, puis sous le coulisseau 35 de façon à la faire ressortir par la fente 37 située à droite.

Le dispositif de support d'objets qui vient d'être expliqué en référence aux figures 1 à 15, est bien adapté pour transporter des objets plats dans la partie haute d'un habitacle de véhicule de particuliers. La souplesse de l'entretoise 6, du ressort 14 ou éventuellement d'une rondelle 23 intercalée sur le filetage 3 entre le pied 18 et la molette 22, est dimensionnée de façon à répondre aux normes de sécurité des passagers en cas de choc conformément au règlement R21. La hauteur des bourrelets 8 de l'entretoise 6 est calculée de sorte qu'en combinaison avec la souplesse des matériaux, un choc sur la barre 21 fait tourner le pied 18 en le faisant sortir de son logement entre les deux bourrelets 8. La barre 21 encaisse ainsi le choc dont l'énergie est dissipée par une déformation de l'entretoise 6 qui est nécessaire pour déchausser le pied 18 et le libérer en rotation avec frottements. L'entretoise 6 se comporte ainsi comme un fusible de sécurité à l'égard des chocs.

La barre 21 continue néanmoins à être maintenue à la paroi 16 et il suffit de desserrer légèrement la molette 22 pour remettre la barre en position travaille ou rangement. A noter que la position rangement, barre en position haute, est facile à obtenir et particulièrement efficace en terme de volume libéré.

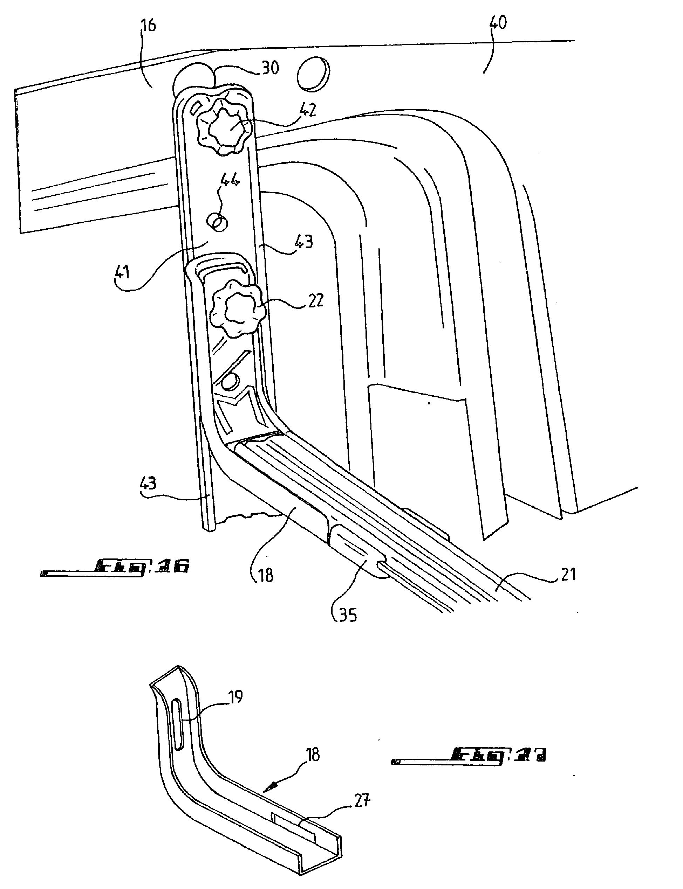

En référence à la figure 16, la paroi 16 est maintenant la paroi d'une coque 40 de véhicule utilitaire. Pour tirer partie de la hauteur sous plafond disponible dans un véhicule utilitaire, l'entretoise 6 mieux adaptée à un véhicule particulier, est remplacée par une planchette verticale 41. Le haut de la planchette est fixée à la paroi 16 au moyen de l'élément de fixation 1 sur lequel on a vissé une mollette 42 semblable à la molette 22 après avoir introduit la tête plate 4 à travers l'ouverture 30, ici de forme circulaire avec un diamètre à peine plus large que celui de la tête plate et baissé l'ensemble dans l'ouverture 17 pratiquée sous la partie la plus basse de l'ouverture 30. Sur la figure 16, l'ouverture 17 est masquée par la planchette 41.

La planchette 41 comprend une nervure 43 sur la longueur de chacun de ses bords verticaux. Les deux nervures 43 sont saillantes sur la face opposée à celle en contact avec la paroi 16 de façon à réaliser une glissière dans laquelle il est possible de faire coulisser la partie verticale du pied 18. La planchette 41 comprend une succession de perçages 44 permettant de positionner le pied 18 en hauteur au moyen d'une vis passée au travers de l'un des perçages 44 et maintenue en vissant à fond la molette 22 dessus.

Le pied 18 est de forme différente de celle du pied 18 représenté en figure 5. Le pied 18 représenté en figure 16, a une forme de L comme le pied 18 représenté en figure 6 avec une partie verticale et une partie horizontale. La partie verticale du pied est suffisamment longue pour offrir un maintien vertical acceptable du pied 18 entre les nervures 43. D'autre part, le pied 18 a une section en forme de U de sorte à pouvoir poser la barre 21 entre les branches verticales du U de la partie horizontale du pied 18 et y maintenir la barre 21 par encliquetage. Le coulisseau 35 de la figure 16 est différent de celui de la figure 14 en ce que la fonction glissière est maintenant réalisée au moyen d'une nervure courant sur la longueur de chaque côté de la barre 21 qui coopère avec une rainure correspondante sur le coulisseau 35.

Le dispositif de support de charge de la figure 16 est adaptable à la taille des objets à transporter. Un positionnement du pied 18 et de la barre 21 au bas de la planchette 41, permet de transporter des objets plus volumineux que ceux qu'il est possible de poser sur la barre 21 lorsque le pied 18 est positionner en haut de la planchette 41.

En référence à la figure 17, l'ouverture 19 dans le pied 18 en forme d'équerre ou plus généralement de L à deux branches, permet de laisser passer l'extrémité 3 filetée pour visser la molette 22. L'ouverture 19 permet également une cinématique du dispositif pour passer de la position en utilisation, représentée sur la figure 11, à la position rangée, représentée en figure 10, contre le garnissage 29 pour prendre le moins de volume possible. Une barrette 27 sur au moins un bord vertical de la branche horizontale du pied 18, permet un glissement de la barre 21 de façon à adapter la largeur du dispositif entre les deux parois 16 de chaque coté du véhicule.

## Revendications

1. Dispositif de chargement d'au moins un objet long en partie haute de l'intérieur d'un véhicule comprenant deux parois latérales (16), comprenant :
- une barre (21) pour supporter ledit objet et de longueur adaptée à la largeur du véhicule ;
- un pied (18) à chaque extrémité de la barre (21) et comprenant une ouverture (19) ;
- deux éléments mâles (1) de fixation, chacun agencé pour traverser l'une des deux parois latérales et l'ouverture (19) du pied (18) ;
- une première molette (22) venant se visser sur une extrémité de l'élément mâle qui dépasse de l'ouverture (19)
- une entretoise (6) agencée pour être disposée dans un habillage intérieur de véhicule, entre l'une des parois (16) et le pied (18), ladite entretoise (6) comprenant une ouverture (11) de part en part pour y faire passer l'élément de fixation (1),
**caractérisé en ce que**
- ledit pied (18) présente sur sa face supérieure une excroissance (20) pourvue d'une glissière (24) apte à emmancher l'extrémité de la barre (21) ; et **en ce que** l'entretoise (6) comprend deux bourrelets (8) agencés pour enchâsser verticalement la première partie du pied (18) en maintenant ladite deuxième partie dans un plan perpendiculaire à la paroi (16).

2. Dispositif selon la revendication 1, **caractérisé en ce que** le pied (18) a une forme de L et comprend deux branches, une première branche comprenant ladite ouverture (19) et une deuxième branche étant agencée pour maintenir la barre (21).

3. Dispositif selon la revendication 1 ou 2, **caractérisé en ce que** la longueur de la première partie du pied (18) est dimensionnée de façon à ce qu'une première orientation verticale de la première partie du pied (18) place la barre (21) dans une position repos en haut de l'intérieur du véhicule et **en ce qu'**une deuxième orientation verticale à 180° de la première partie du pied (18) place la barre (21) dans une position travail plus basse qui permet le chargement de l'objet long.

4. Dispositif selon l'une des revendications 1 à 3, **caractérisé en ce que** l'entretoise (6) est dimensionnée de façon à ce qu'un choc dépassant des limites standardisées de sécurité, déchausse le pied (18) de l'entretoise (6) en maintenant la barre (21) en partie haute de l'intérieur du véhicule.

5. Dispositif selon l'une des revendications précédentes, **caractérisé en ce qu'**il comprend au moins un coulisseau (35) agencé pour glisser le long de la barre (21) et pour faire passer au moins une sangle sous la barre (21).

## Claims

1. Device for loading at least one long object in the upper portion of the interior of a vehicle comprising two lateral walls (16), said device comprising:
- a bar (21) for supporting said object and of a length adapted to the width of the vehicle;
- at each end of the bar (21) a foot (18) comprising an aperture (19);
- two male fixing elements (1), each configured to traverse one of the two lateral walls and the aperture (19) in the foot (18);
- a first knurled wheel (22) screwed onto an end of the male element which extends beyond the aperture (19);
- a spacer (6) configured to be arranged in an interior trim of the vehicle and between one of the walls (16) and the foot (18), said spacer (6) comprising a through-aperture (11) to allow the fixing element (1) to pass through;
**characterised in that** said foot (18) has a protrusion (20) on its upper face, said protrusion being provided with a slideway (24) adapted for attachment to the end of the bar (21), and **in that** the spacer (6) comprises two rounded flanges (8) configured to vertically encase the first portion of the foot (18) whilst keeping said second portion in a plane perpendicular to the wall (16).

2. Device according to claim 1, **characterised in that** the foot (18) is L-shaped and comprises two branches: a first branch comprising said aperture (19) and a second branch being configured to hold the bar (21).

3. Device according to either claim 1 or claim 2, **characterised in that** the length of the first portion of the foot (18) is dimensioned in such a way that a first vertical orientation of the first portion of the foot (18) places the bar (21) in a rest position at the top of the vehicle interior, and **in that** a second vertical orientation at 180° to the first portion of the foot (18) places the bar (21) in a lower work position which makes it possible to load the long object.

4. Device according to any one of claims 1 to 3, **characterised in that** the spacer (6) is dimensioned in such a way that an impact exceeding standard safety limits loosens the foot (18) from the spacer (6) whilst keeping the bar (21) in the upper portion of the vehicle interior.

5. Device according to any one of the preceding claims, **characterised in that** it comprises at least one runner (35) configured to slide along the bar (21) and pass at least one strap beneath the bar (21).

## Patentansprüche

1. Vorrichtung zur Ladung zumindest eines langen Objekts im oberen Teil des Innenraums eines Fahrzeugs mit zwei seitlichen Wänden (16), enthaltend:
- eine Stange (21) zur Aufnahme des Objekts mit an die Breite des Fahrzeugs angepasster Länge;
- einen Fuß (18) an jedem Ende der Stange (21) mit einer Öffnung (19);
- zwei einsteckbare Befestigungselemente (1), die jeweils ausgebildet sind, um eine der beiden seitlichen Wände und die Öffnung (19) des Fußes (18) zu durchsetzen;
- ein erstes Rädchen (22) zur Verschraubung an einem Ende des einsteckbaren Elements, das die Öffnung (19) durchsetzt;
- einen Quersteg (6), der ausgebildet ist, um in einer Innenverkleidung des Fahrzeugs angeordnet zu werden zwischen einer der Wände (16) und dem Fuß (18), wobei der Quersteg (6) eine durchgängige Öffnung (11) enthält, um das Befestigungselement (1) durchtreten zu lassen;
**dadurch gekennzeichnet, dass** der Fuß (18) an seiner oberen Seite eine mit einer Gleitführung (24) versehene Ausstülpung (20) aufweist für das Einschieben des Endes der Stange (21); und dadurch, dass der Quersteg (6) zwei Wülste (8) enthält, die ausgebildet sind, um den ersten Teil des Fußes (18) vertikal zu versenken, indem der zweite Teil in einer zu der Wand (16) senkrechten Ebene gehalten wird.

2. Vorrichtung nach Anspruch 1, **dadurch gekennzeichnet, dass** der Fuß (18) L-förmig ist und zwei Schenkel enthält, wobei ein erster Schenkel die Öffnung (19) enthält und ein zweiter Schenkel ausgebildet ist, um die Stange (21) festzuhalten.

3. Vorrichtung nach Anspruch 1 oder 2, **dadurch gekennzeichnet, dass** die Länge des ersten Teils des Fußes (18) derart dimensioniert ist, dass eine erste vertikale Schwenkung des ersten Teils des Fußes (18) die Stange (21) in eine Ruhestellung im oberen Teil des Innenraums des Fahrzeugs bringt und dadurch, dass eine zweite vertikale Schwenkung des ersten Teil des Fußes (18) um 180° die Stange (21) in eine niedrigere Arbeitsstellung bringt, welche die Ladung eines langen Objekts ermöglicht.

4. Vorrichtung nach einem der Ansprüche 1 bis 3, **dadurch gekennzeichnet, dass** der Quersteg (6) derart dimensioniert ist, dass bei einem Aufprall, der standardisierte Sicherheitsgrenzwerte übersteigt, der Fuß (18) aus dem Zwischensteg (6) herausgezogen wird, indem die Stange (21) im oberen Teil des Innenraums des Fahrzeugs festgehalten wird.

5. Vorrichtung nach einem der vorangegangenen Ansprüche, **dadurch gekennzeichnet, dass** sie zumindest einen Schieber (35) enthält, der ausgebildet ist, um entlang der Stange (21) zu gleiten und um zumindest einen Gurt unter der Stange (21) durchzuziehen.
